# EUROPÄISCHE PATENTSCHRIFT

(11) **EP 1 941 268 B1**
(45) Veröffentlichungstag und Bekanntmachung des Hinweises auf die Patenterteilung: **26.01.2011**
(21) Anmeldenummer: 06793764.9
(22) Anmeldetag: 22.09.2006
(51) Int. Cl.: G01N 27/407

(54) **MISCHPOTENZIALSENSOR ZUR MESSUNG EINER GASKONZENTRATION**
MIXTURE POTENTIAL SENSOR FOR MEASURING A GAS CONCENTRATION
DETECTEUR DE POTENTIEL DE MELANGE DESTINE A MESURER UNE CONCENTRATION GAZEUSE

(30) Priorität: 18.10.2005 DE 102005049775
(43) Veröffentlichungstag der Anmeldung: 09.07.2008
(73) Patentinhaber: ROBERT BOSCH GMBH, 70442 Stuttgart (DE)
(72) Erfinder: ZIEGLER, Joerg, 71277 Rutesheim (DE); ROESSLER, Mario, 70176 Stuttgart (DE)
(86) Internationale Anmeldenummer: PCT/EP2006/066650
(87) Internationale Veröffentlichungsnummer: WO 2007/045541

(56) Entgegenhaltungen:
- DE-A- 19 912 100
- DE-A1- 10 163 942
- DE-A1- 19 712 315
- DE-A1- 19 833 087
- DE-A1- 19 932 048
- GB-A- 2 288 874
- US-A- 5 720 864
- US-B1- 6 196 053
- TAKEUCHI T. ET AL: "Current-voltage characteristics of various metal electrodes in limiting-current-type zirconia cells: application to hydrocarbon sensors" JOURNAL OF THE ELECTROCHEMICAL SOCIETY, vol. 148, no. 9, 2001, pages H132-H138, XP007908815 ISSN: 0013-4651
- VOGEL A.; BAIER G.; SCHULE V.: "Non-Nernstian potentiometric zirconia sensors: screening of potential working electrode materials" SENSORS AND ACTUATORS B, vol. 15-16, 1993, pages 147-150, XP007908817 ISSN: 0925-4005

## Beschreibung

### Stand der Technik

Die Ereindung betrifft einen Sensor zur Messung der Konzentration einer Gaskomponente in einem Gasgemisch nach dem Oberbegriff des Anspruchs.

Ein bekannter, zur Regelung des Luft-/Kraftstoffverhältnisses von Verbrennungsgemischen für Verbrennungsmotoren eingesetzter Sensor geht beispielsweise aus der DE 101 56 248 C1 hervor.

Ein solcher Sensor weist ein beheiztes Zirkonoxid-Element auf mit einem Hohlraum, der mit dem Abgas der Brennkraftmaschine durch eine Diffusionsbarriere verbunden ist sowie eine Referenzelektrode, eine innere Pumpelektrode und eine äußere Pumpelektrode. Alle Elektroden bestehen aus Platin (Cermet). Die Referenzelektrode ist in einem Luftreferenzkanal angeordnet oder wird durch eine sogenannte gepumpte Referenz gebildet. Durch Anlegen einer elektrischen Spannung zwischen der inneren Pumpelektrode und der äußeren Pumpelektrode kann Sauerstoff aus dem Hohlraum heraus oder in den Hohlraum hinein gepumpt werden. Wenn die Außenpumpelektrode gegenüber der inneren Pumpelektrode elektrisch positiv ist, wird Sauerstoff aus dem Hohlraum heraus gepumpt. Mit wachsender Spannung steigt der Strom an, bis er durch das Nachströmen durch die Diffusionsbarriere limitiert wird (Grenzstrombereich). Durch einen Regelkreis wird der Pumpstrom zwischen der inneren Pumpelektrode und der äußeren Pumpelektrode so eingeregelt, dass immer eine konstante, vorgegebene Nernstspannung zwischen der Referenzelektrode und der inneren Pumpelektrode gemessen wird. Die Größe des notwendigen Pumpstroms hängt von der im Abgas vorhandenen Sauerstoffkonzentration und damit vom Lambda-Wert ab. Im Gegensatz zur Sprungsonde, deren Signal bei λ = 1 abrupt von einem sehr hohen Wert auf einen sehr niedrigen Wert springt, ist das Signal eines solchen auch als Breitband-Lambda-Sonde (LSU) bezeichneten Sensors im Grunde stetig.

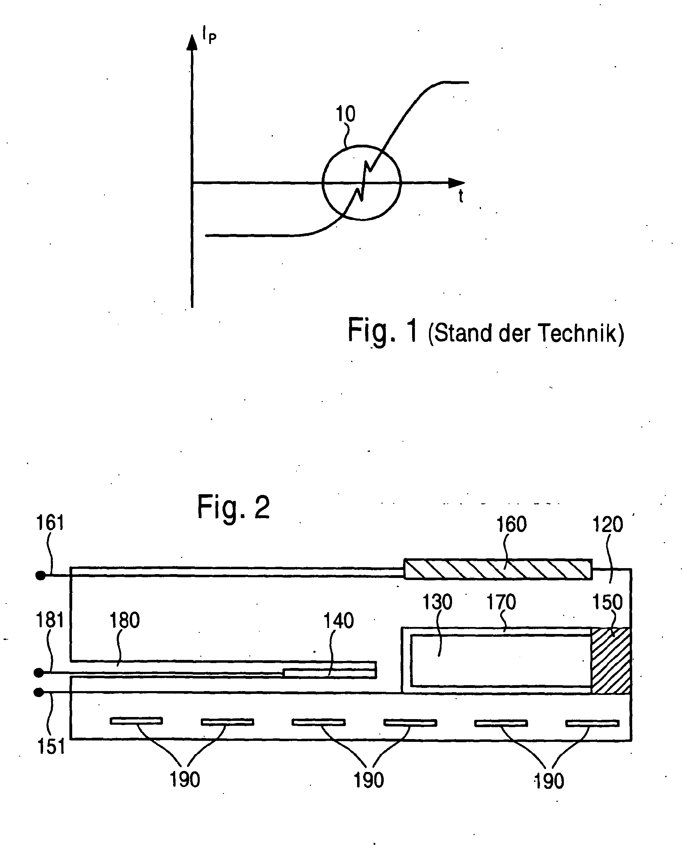

Beim Übergang von einem fetten zu einem mageren Gemisch zeigt nun beispielsweise das Signal des Pumpstroms über der Zeit bei etwa λ = 1 einen Überschwinger bzw. einen Gegenschwinger, die als λ-1-Welligkeit bezeichnet werden. Diese λ-1 -Welligkeit wirkt sich besonders bei Anwendungen für die Einzelzylindererkennung störend aus. Fig. 1 zeigt schematisch den Signalverlauf beim Auftreten einer solchen λ-1-Welligkeit, die in Fig. 1 mit dem Bezugszeichen 10 gekennzeichnet ist.

Der Erfindung liegt daher die Aufgabe zugrunde, einen Sensor der eingangs beschriebenen Art dahingehend weiterzubilden und ein Verfahren zu dessen Herstellung zu vermitteln, dass diese störende λ-1-Welligkeit reduziert wird.

### Vorteile der Erfindung

Diese Aufgabe wird durch einen Sensor mit den Merkmalen des unabhängigen Anspruchs gelöst.

Grundidee der Erfindung ist es, die äußere Pumpelektrode aus einem Festkörper, der zur Ausbildung von Mischpotenzialen führt, auszubilden. Auf diese Weise wird der Sprung der effektiven Pumpspannung bei λ = 1 eliminiert oder zumindest erheblich reduziert und hierdurch die λ-1-Welligkeit vermindert.

Der Effekt des Mischpotenzialausbildung wird beispielsweise in der GB2288874 beschrieben.

Erfindungsgemäß besteht der besonders einfach herzestellende Festkörper aus einer Platin-Elektrode, auf der eine Goldabscheidung erfolgt ist. Die Goldabscheidung kann entweder durch eine galvanische Abscheidung von Gold auf der Platin-Elektrode erfolgen oder durch Zersetzung eines Goldsalzes, z.B. HAuCl₄, in einem Post-Firing-Prozess auf der Platin-Elektrode.

### Zeichnung

Weitere Vorteile und Merkmale der Erfindung sind Gegenstand der nachfolgenden Beschreibung und der zeichnerischen Darstellung von Ausführungsbeispielen eines erfindungsgemäßen Sensors.

In der Zeichnung zeigen:
- Fig. 1: schematisch die aus dem Stand der Technik bekannte λ-1-Welligkeit des Pumpstroms über der Zeit;
- Fig. 2: schematisch geschnitten ein von der Erfindung Gebrauch machender Sensor;
- Fig. 3: schematisch den Pumpstrom über der Zeit bei einem Sensorelement mit einer Platinaußen- elektrode und
- Fig. 4: den Pumpstrom über der Zeit bei einem Sensorelement mit einer Platinaußenelektrode, die durch Goldabscheidung galvanisch vergoldet wurde.

### Beschreibung der Ausführungsbeispiele

Der in Fig. 2 dargestellte Sensor umfasst ein durch eine Heizung, gebildet durch Heizelemente 190, beheiztes Zirkonoxidelement 120, welches einen Hohlraum 130 aufweist, der mit dem Abgas beispielsweise einer (nicht dargestellten) Brennkraftmaschine durch eine Diffusionsbarriere 150 verbunden ist, sowie eine Referenzelektrode 140, eine innere Pumpelektrode 170 und eine äußere Pumpelektrode 160.

Die Referenzelektrode 140 und die innere Pumpelektrode 170 bestehen aus Platin (Cermet). Die Referenzelektrode 140 befindet sich in einem Luftreferenzkanal 180, sie kann auch als eine sogenannte gepumpte Referenz ausgebildet sein. Durch Anlegen einer elektrischen Spannung an die Zuleitungen 161, 151 zwischen der inneren Pumpelektrode 170 und der äußeren Pumpelektrode 160 kann Sauerstoff aus dem Hohlraum 130 heraus oder in diesen Hohlraum 130 hinein gepumpt werden. Wenn die äußere Pumpelektrode 160 gegenüber der inneren Pumpelektrode elektrisch positiv ist, wird beispielsweise Sauerstoff aus dem Hohlraum 130 heraus gepumpt. Mit wachsender Spannung steigt nun der Strom an, bis er durch das Nachströmen durch die Diffusionsbarriere 150 limitiert wird (Grenzstrombereich). Durch einen (nicht dargestellten) Regelkreis wird der Pumpstrom I_{P} zwischen der inneren Pumpelektrode 170 und der äußeren Pumpelektrode 160 so eingeregelt, dass immer eine konstante, vorgegebene Nernstspannung U_{N} zwischen der Referenzelektrode 140 und der inneren Pumpelektrode 170 gemessen wird. Die Größe des notwendigen Pumpstroms I_{P} hängt von der im Abgas vorhandenen Sauerstoffkonzentration und damit vom λ-Wert ab. Im Gegensatz zu einer aus dem Stand der Technik bekannten Sprungsonde, die bei λ = 1 abrupt von einem sehr hohen Signal auf ein sehr niedriges Signal springt, ist das Signal dieses Sensors, der auch als Breitband-Lambdasonde (LSU) bezeichnet wird, im Wesentlichen stetig.

Beim Übergang von einem fetten zu einem mageren Gemisch tritt nun allerdings ungefähr bei λ =1 in dem Signal des Pumpstroms I_{P} über der Zeit ein in Fig. 1 schematisch dargestellter Überschwinger bzw. Gegenschwinger auf, die als λ-1-Welligkeit bezeichnet werden. Diese λ-1-Welligkeit wirkt sich ganz besonders bei Anwendungen zur Einzelzylindererkennung störend aus.

Zur Vermeidung einer derartigen λ-1-Welligkeit sieht die Erfindung vor, die äußere Pumpelektrode 160 durch einen Festkörper zu bilden, der zur Ausbildung von Mischpotenzialen führt. Die Erfindung geht dabei von der Erkenntnis aus, dass die beobachtete λ-1-Welligkeit durch das Zusammenwirken von Sonde und Regler entsteht, wobei auch kapazitive Einkopplungen der äußeren Pumpelektrode 160 auf die Referenzelektrode 140 berücksichtigt werden müssen. Es hat sich gezeigt, dass die Größe des Sprungs durch den Sprung der Nernstspannung beeinflusst wird, der bei einer reinen Platinelektrode nur vom Sauerstoffpartialdruck abhängt. Das Potenzial von Mischpotenzialelektroden hängt dagegen von der Konzentration mehrerer Abgaskomponenten ab. Aus diesem Grunde entstehen bei Verwendung einer Mischpotenzialelektrode als äußerer Pumpelektrode 160 nicht die als λ-1-Welligkeit bezeichneten Sprünge im Signal des Pumpstroms oder der Pumpspannung.

Mischpotenzialelektroden sind prinzipiell Nichtgleichgewichtselektroden. Zwar muss zur Bestimmung des λ-Wertes das thermodynamische Gleichgewicht an der inneren Pumpelektrode 170 eingestellt sein. An der äußeren Pumpelektrode 160, wo ein Gaswechsel stattfindet, muss dies nicht notwendigerweise der Fall sein. Die Elektrode kann also hier auch ein Festkörper sein, der ein Mischpotenzial mit anderen Abgaskomponenten ausbildet. Der Festkörper muss lediglich so gewählt werden, dass die Pumpfähigkeit der äußeren Pumpelektrode 160 ausreichend groß ist. Durch die Ausbildung der äußeren Pumpelektrode 160 als Mischpotenzialelektrode wird der Sprung, der sich im Signal der effektiven Pumpspannung bei λ = 1 zeigt, eliminiert oder zumindest erheblich reduziert.

Die äußere Pumpelektrode 160 wird dadurch realisiert, dass bei einem an sich bekannten Festkörper aus Platin eine galvanische Goldabscheidung erfolgt. Möglich ist es auch, die Platin-Elektronde durch einen Imprägnierprozess zu modifizieren, das heißt die Platin-Eletrode mit einem geeigneten Au-Salz, z.B. HAuCl₄, zu imprägnieren und in einem Post-Firing-Prozess das Au-Salz zu zersetzen.

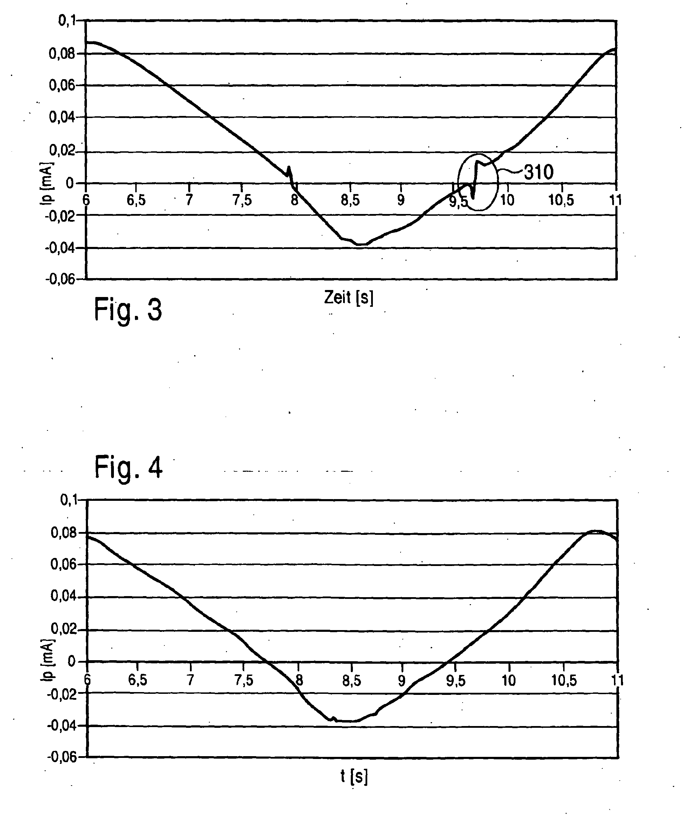

In Fig. 3 ist der Signalverlauf des Pumpstroms I_{P} über der Zeit bei einem Sensor dargestellt, welcher eine Außenelektrode aus Platin aufweist, wie sie aus dem Stand der Technik bekannt ist. Der Pumpstrom zeigt hier deutlich die vorbeschriebene λ-1-Welligkeit, in Fig. 3 mit Bezugszeichen 310 versehen.

Fig. 4 zeigt den Pumpstrom über der Zeit des in Fig. 3 dargestellten Sensors, wobei die Außenelektrode durch Goldabscheidung vergoldet wurde. Nach galvanischer Vergoldung der äußeren Pumpelektrode 160 tritt die λ-1-Welligkeit nicht mehr auf.

Vorstehend wurde eine Breitband-Lambdasonde (LSU) mit einer als Mischpotenzialelektrode ausgebildeten äußeren Pumpelektrode beschrieben. Es versteht sich, dass die Erfindung nicht auf eine solche Breitband-Lambdasonde beschränkt ist. Rein prinzipiell ist es auch möglich, eine Pumpsonde (LSP) mit einer Mischpotenzial-Pumpelektrode zu versehen, insbesondere einer Platin-Gold-Elektrode, um so Signalunstetigkeiten zu vermindern.

## Patentansprüche

1. Sensor zur Messung der Konzentration einer Gaskomponente in einem Gasgemisch, mit einem für Ionen leitfähigen Festelektrolyten (120) und mit durch den Festelektrolyten (120) voneinander getrennten Elektroden (160, 170), von denen eine Außenelektrode (160) dem Gasgemisch ausgesetzt ist und eine innenelektrode (170) in einem durch eine Diffusionsbarriere (150) vom Gasgemisch getrennten Hohlraum (130) angeordnet ist, wobei die innenelektrode (170) und die Außenelektrode (160) zusammen mit dem Festelektrolyten (120) eine elektrochemische Pumpzelle bilden, wobei die Außenelektrode (160) aus einem Festkörper besteht, der zur Ausbildung von Mischpotenzialen führt und aus einer Platinelektrode besteht, **dadurch gekennzeichnet, dass** auf ihr eine Goldabscheidung erfolgt ist.

## Claims

1. Sensor for measuring the concentration of a gas component in a gas mixture, having an ion-conductive solid electrolyte (120) and having electrodes (160, 170) which are separated from one another by the solid electrolyte (120), an outer electrode (160) of which is exposed to the gas mixture and an inner electrode (170) of which is arranged in a cavity (130) which is separated from the gas mixture by a diffusion barrier (150), the inner electrode (170) and the outer electrode (160) forming an electrochemical pump cell together with the solid electrolyte (120), the outer electrode (160) consisting of a solid which results in the formation of mixed potentials and consists of a platinum electrode, **characterized in that** gold is deposited on said electrode.

## Revendications

1. Détecteur pour mesurer la concentration d'un composant gazeux d'un mélange de gaz, le détecteur présentant un électrolyte solide (120) conducteur pour les ions et des électrodes (160, 170) séparées l'une de l'autre par l'électrolyte solide (120), parmi lesquelles une électrode extérieure (160) est exposée au mélange de gaz et une électrode intérieure (170) est disposée dans une cavité (130) séparée du mélange de gaz par une barrière (150) à la diffusion, l'électrode intérieure (170) et l'électrode extérieure (160) formant avec l'électrolyte solide (120) une cellule électrochimique de pompage, l'électrode extérieure (160) étant constituée d'un corps solide qui conduit à la formation de potentiels mixtes et d'une électrode en platine,
**caractérisé en ce que**
un dépôt d'or est réalisé sur cette dernière.
